# EUROPEAN PATENT SPECIFICATION

(11) **EP 1 913 459 B1**
(45) Date of publication and mention of the grant of the patent: **08.05.2019**
(21) Application number: 06773577.9
(22) Date of filing: 20.06.2006
(51) Int. Cl.: G06F 9/451, H04N 21/462

(54) **SYSTEM AND METHOD FOR DYNAMIC RESIZING OF WEB-BASED GUIS**
SYSTEM UND VERFAHREN ZUR DYNAMISCHEN GRÖSSENANPASSUNG VON WEBBASIERTEN GRAPHISCHEN BENUTZEROBERFLÄCHEN
SYSTEME ET PROCEDE DE REDIMENSIONNEMENT D'INTERFACES GRAPHIQUES DANS UN ENVIRONNEMENT WEB

(30) Priority: 02.08.2005 US 704736 P; 04.04.2006 US 398138
(43) Date of publication of application: 23.04.2008
(73) Proprietor: Sony Corporation, Tokyo 141 (JP); SONY ELECTRONICS, INC., Park Ridge, New Jersey 07656 (US)
(72) Inventor: LIN, Frank, Li-De, Escondido, CA 92026 (US); NGUYEN, Rachel, Thuy, San Jose, CA 95148 (US)
(74) Representative: D Young & Co LLP
(86) International application number: PCT/US2006/023893
(87) International publication number: WO 2007/018753

(56) References cited:
- WO-A1-99/35832
- US-A1- 2002 143 822
- US-A1- 2004 031 058
- US-A1- 2004 210 824
- US-A1- 2004 226 051
- US-A1- 2004 268 299

## Description

This application claims priority to U.S. provisional patent application serial no. 60/704,736, filed August 2, 2005.

### I. FIELD OF THE INVENTION

The present invention relates generally to dynamically reconfiguring graphical user interfaces (GUIs), and in particular Web-based GUIs, for changing screen resolutions and/or user resizing of the desired GUI window.

### II. BACKGROUND OF THE INVENTION

In the past few years, there has been a convergence of personal computers and consumer electronics devices. This is because harnessing the power and flexibility of the PC platform provides users with improved entertainment experiences. As understood herein, however, this convergence is not without its challenges, one of which is designing GUIs that can work with plural screen resolutions, e.g., that can be displayed for use with a standard definition (4x3) television screen and that can also be displayed for use with a high definition (16x9 or 16x10) screen. Furthermore, a user sometimes is permitted to establish the size of a GUI window on a screen, further complicating GUI design.

As further understood herein, solutions that require custom graphics engines or built-in browser zoom functions suffer from being highly complex and/or poor performers, particularly when used in non-native environments (i.e., with screen resolutions that depart from a default resolution). With these critical recognitions in mind, the invention herein is provided.

US2004/210824, US2004/268299, WO 99/35832, US2002/143822 and US2004/031058 describe various systems in which a graphical user interface can be reconfigured.

US2004/226051 (Carney John ET AL), 11 November 2004 describes the use of timers in order to regulate the refreshing rates of the GUI.

### SUMMARY OF THE INVENTION

Aspects of the invention are defined in the appended claims.

The details of the present invention, both as to its structure and operation, can best be understood in reference to the accompanying drawings, in which like reference numerals refer to like parts.

### BRIEF DESCRIPTION OF THE DRAWINGS

Figure 1 is a block diagram of one non-limiting implementation of the present invention;
Figure 2 is a screen shot of a non-limiting GUI configured for a first screen size or user-defined GUI window size;
Figure 3 is a screen shot of a non-limiting GUI configured for a second screen size or user-define GUI window size;
Figure 4 is a screen shot of another non-limiting GUI configured for a first screen size or user-defined GUI window size;
Figure 5 is a screen shot of the other non-limiting GUI configured for a second screen size or user-defined GUI window size; and
Figure 6 is a flow chart of a non-limiting implementation of the reconfiguring logic.

### DETAILED DESCRIPTION OF THE PREFERRED EMBODIMENT

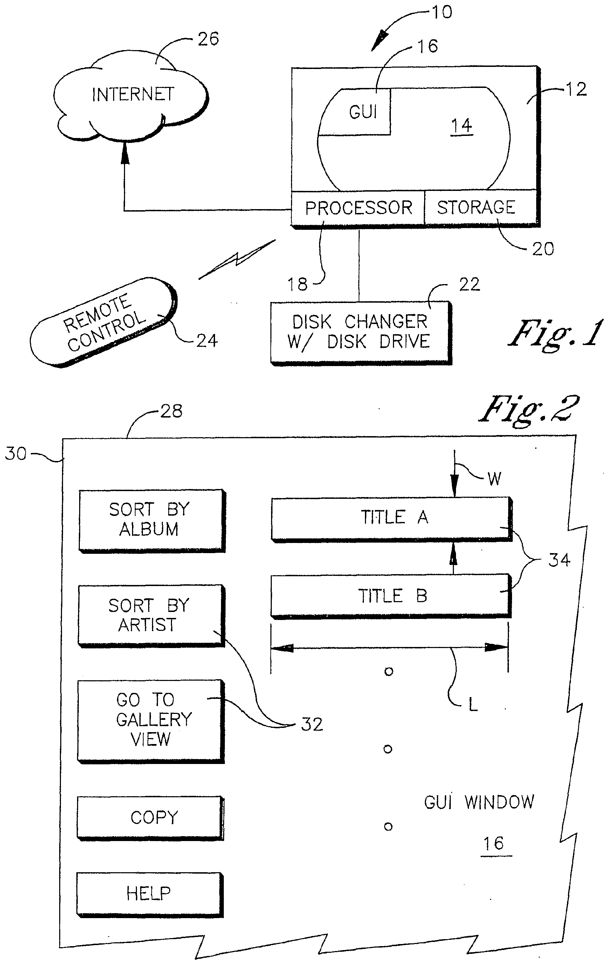

Referring initially to Figure 1, a system is shown, generally designated 10, that includes an audio-video system 12 having a video screen 14, all or a portion of which may be used to present a graphical user interface (GUI) display in a GUI window 16. By way of non-limiting example, the A/V system 12 may include a TV alone or in combination with an internal or external game console and/or an internal or external disk player, and the A/V system 12 accordingly may include a processor 18 and data storage 20 either within a housing of a TV or within a separate set-top box or other computing device. The processor 18 may access data in the data store 20 to execute the logic described herein.

As shown in Figure 1, the system 10 may also include a disc changer 22 that can have one or more drives, e.g., optical drives for reading optical discs and sending the resultant multimedia stream to the A/V system 12 for playing in response to user manipulation of the GUI. Accordingly, the system 10 also can include a remote control device 24 or other suitable user-manipulable input device, including voice recognition devices, that can be used to operate the A/V system 12 GUI.

In some implementations, the resolution of the screen 14 may be standard definition, e.g., 4x3, or it may be high definition, e.g., 16x9 or 16x10, or it maybe other resolutions. Regardless, as set forth further below the GUI is automatically resized and in some instances reconfigured as appropriate for the screen resolution and/or user-defined GUI window 16 size. In any case, the processor 18 may communicate with the Internet 26 if desired.

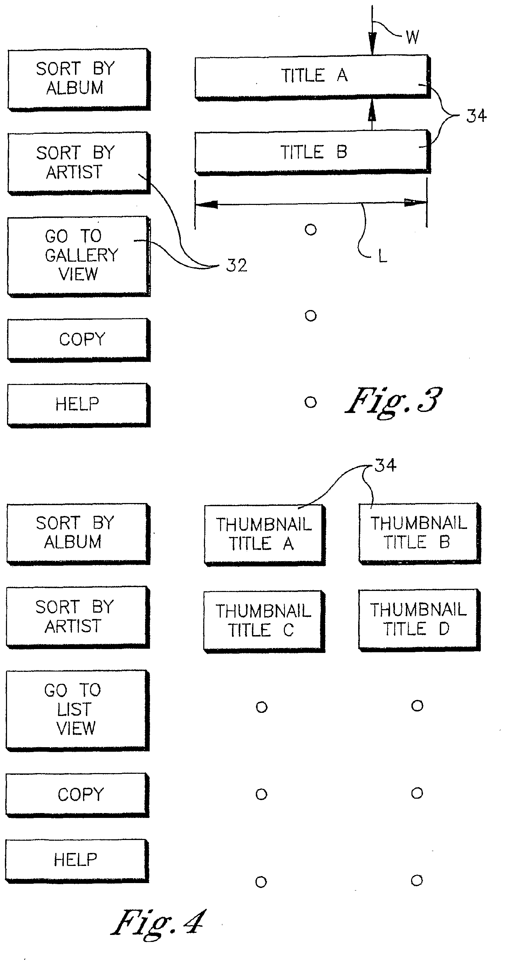

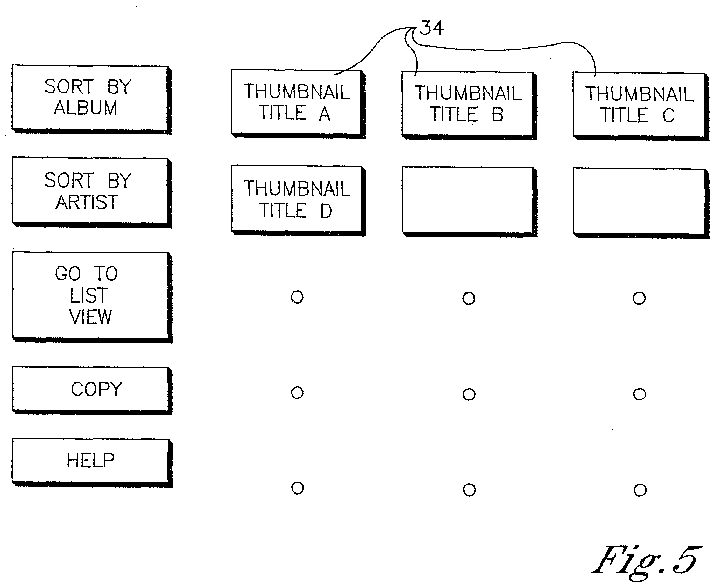

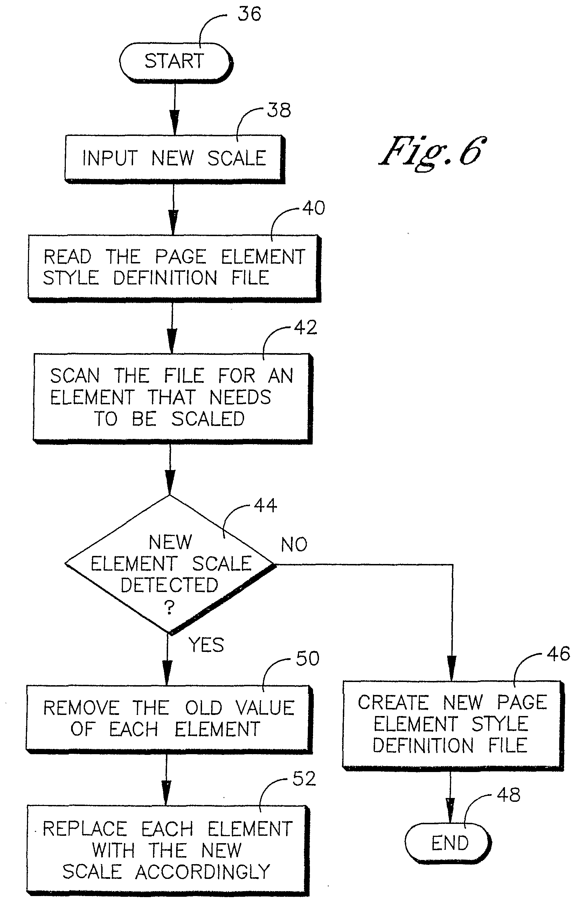

Figures 2-5 show how the present GUI appears on various screens of different resolutions after the logic of Figure 6 and the below pseudo-code has been executed. In Figure 2, the GUI window is defined in part by orthogonal boundaries such as a top boundary 28 and a left boundary 30. The GUI itself may include control buttons 32 and select buttons 34 that are arranged in accordance with selections of the control buttons 32. For instance, the user can click on a control button 32 to cause the select buttons 32 to be sorted by album or by artist as shown. Also, the user can elect to display select buttons as thumbnails (discussed further below in reference to Figures 4 and 5) instead of in the list format shown in Figures 2 and 3 by appropriately manipulating a "gallery view" control button. Copy and help control buttons can also be provided to invoke copy and help functions in accordance with principles known in the art.

In any case, as shown using the select buttons 34 as non-limiting examples, a button of the GUI may have a width "W" and a length "L" when displayed on a screen of a first resolution as shown in Figure 2, and a different width "W" and/or length "L" when displayed on a screen of a second resolution as shown in Figure 3, it being understood that the overall button size and/or the ratio of length to width may change between resolutions as shown. The same principle can be used to change button size and configuration for the same screen resolution but different user-defined GUI window 16 sizes.

Moreover, the screen layout of GUI elements can change depending on screen resolution and/or user-established GUI window size. This can be seen in reference to Figures 4 and 5, in which the select buttons have been reconfigured from a simple title listing to thumbnails of the underlying object (e.g., a disc-borne movie) being selected. In Figure 4, two columns of select buttons 34 are established in the GUI window 16, whereas in Figure 5, for a wider screen resolution or for a wider user-defined GUI window, the select buttons 34 may be rearranged into three columns as shown. When the select buttons are configured as thumbnails, the control button 32 that had formerly indicated "go to gallery view" may change to indicate "go to list view", so the user can revert to the list-type select buttons 34 shown in Figures 2 and 3.

In general, the logic to produce functionality discussed above begins with the establishment of a default GUI button size and arrangement for a default resolution or resolutions. In one non-limiting implementation, a default layout is established using a Web-based language such as hypertext mark-up language (HTML) or XML, and may define GUI elements using a style sheet. In one implementation, each GUI button is defined terms of its width "W" and length "L", as well as in terms of its position from, e.g., the left edge 30 and top edge 28 of the GUI window 16. The size of the font displayed in the button can also be established. One and only one template may be established for a default resolution, with resizing and reconfiguring of GUI elements being calculated on the fly, or multiple templates may be established, one for each common resolution (e.g., one for 4x3, one for 16x9, one for 16x10).

To display the GUI, a Web browser can be invoked. To re-size and/or to reconfigure the GUI display in accordance with the above disclosure, the logic of Figure 6 may then be invoked.

Commencing at start state 36 the logic moves to block 38 to obtain the resolution of the screen on which the GUI is to be displayed. Ordinarily the processor 18 possesses screen resolution information. Proceeding to block 40, the appropriate GUI template is read from, e.g., the storage 20. When only a single default template is used, it is read at block 40, but when plural templates are used, the one that most closely matches the detected resolution is read.

Proceeding to block 42, the template file is scanned to find any elements that might require re-sizing and/or re-configuring, as might occur when the assumed screen resolution of the default template does not match the actual screen resolution or when a user re-defines the GUI window size. Decision diamond 44 merely indicates that when a new element scale is not known, the logic may flow to block 46 to create a new GUI file, ending at state 48.

On the other hand, when the new scale is known and another template fitting the new scale is available, the logic flows to block 50 to remove the old value of the affected elements and to replace them at block 52 with new scale values from the new template. Alternatively, the new values may be calculated on the fly when no new template exists in accordance with principles above. For instance, one or more of the width "W", length "L", position from, e.g., the left edge 30 and top edge 28 of the GUI window 16, and font size of the text displayed in the element may be modified as appropriate to fit inside the new GUI window area. For example, the GUI elements can be enlarged or shrunk in proportion to the ratio between the current screen resolution and new screen resolution.

The pseudo code below provides further non-limiting details that may be implemented. The timer mentioned in the code below is implemented to avoid excessive reconfiguring when a user might quickly and repeatedly input re-sizing commands.

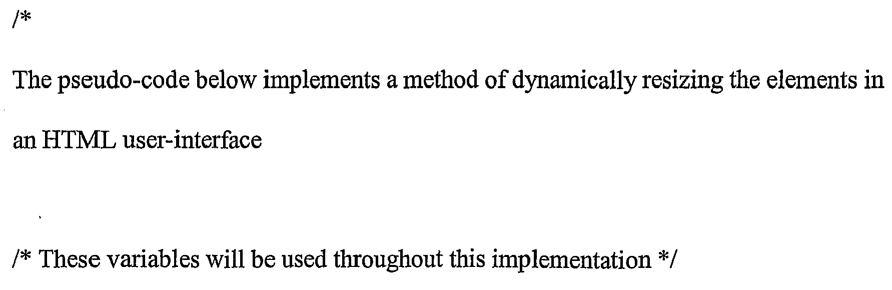

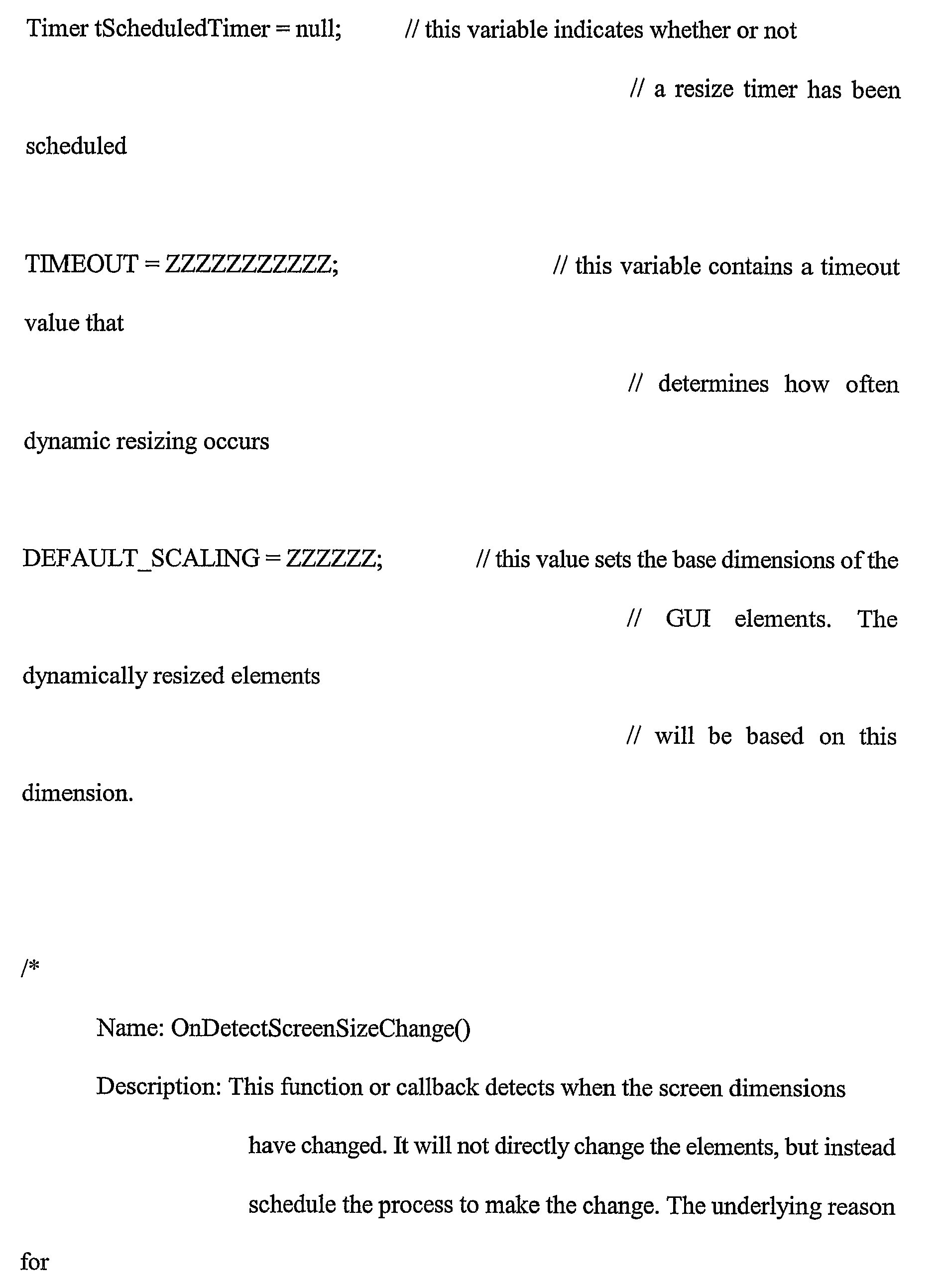

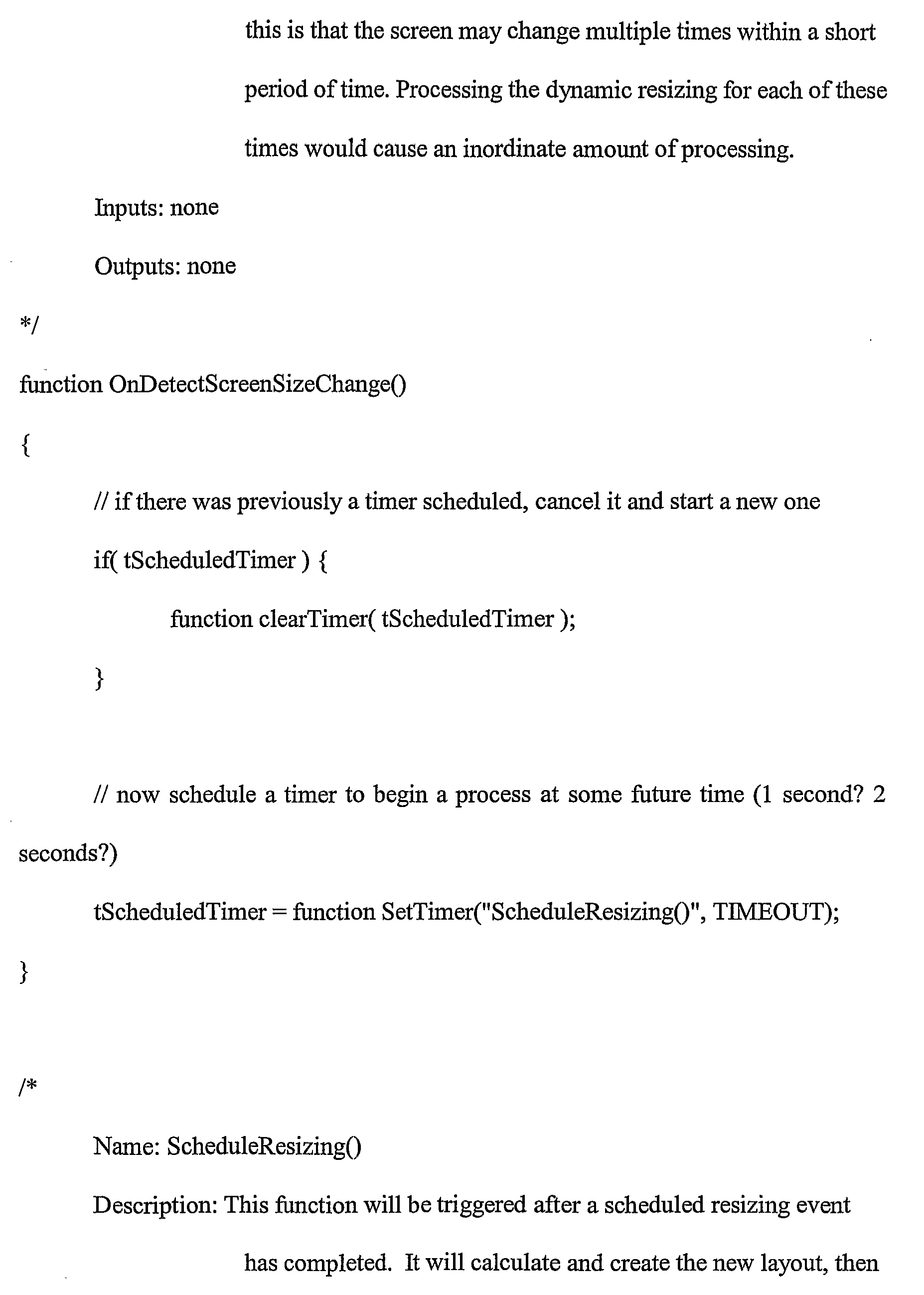

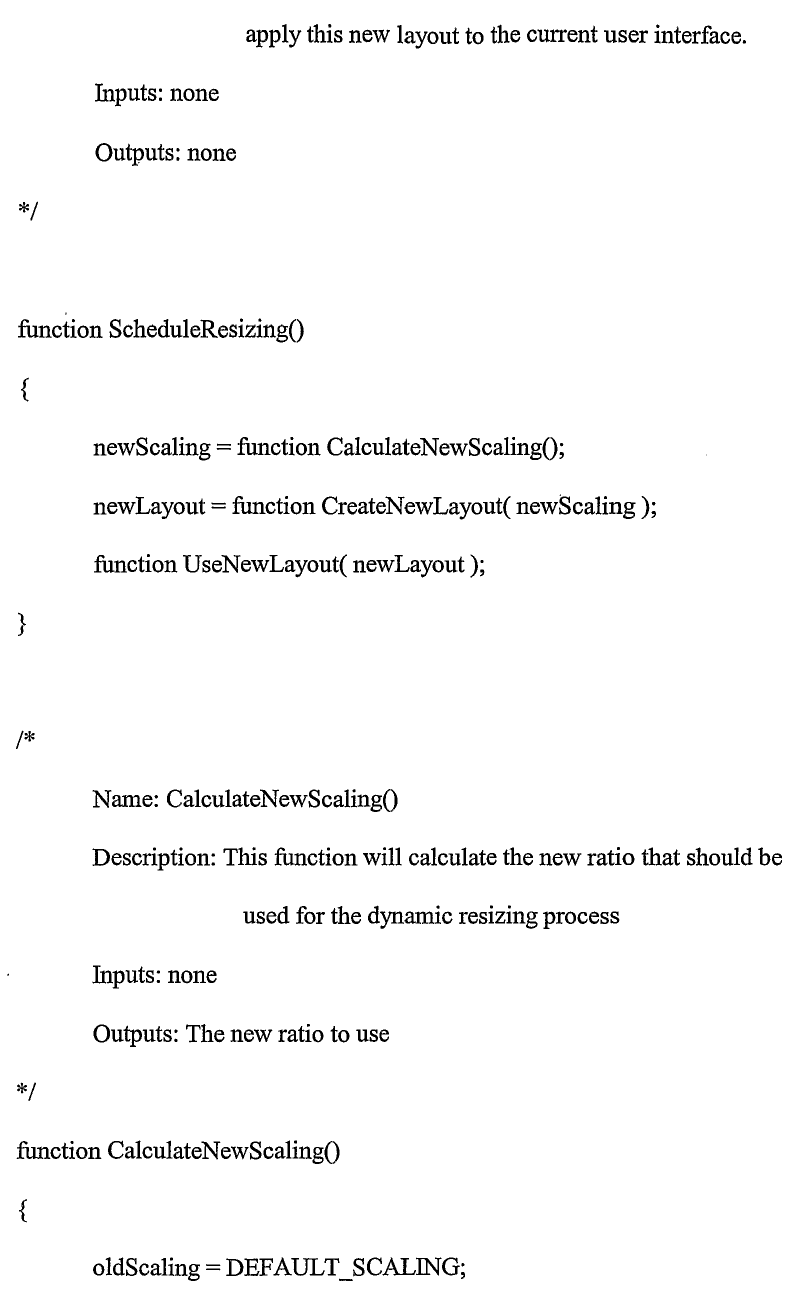

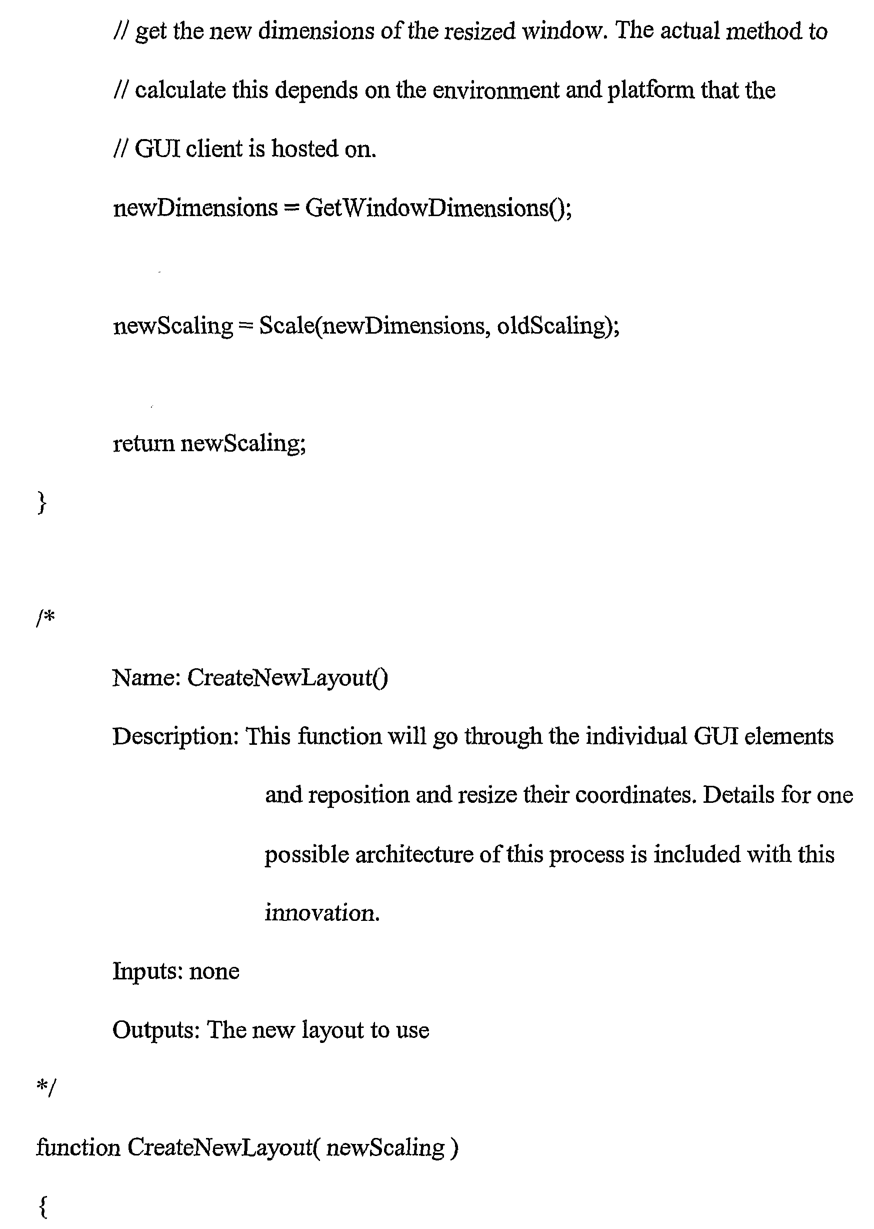

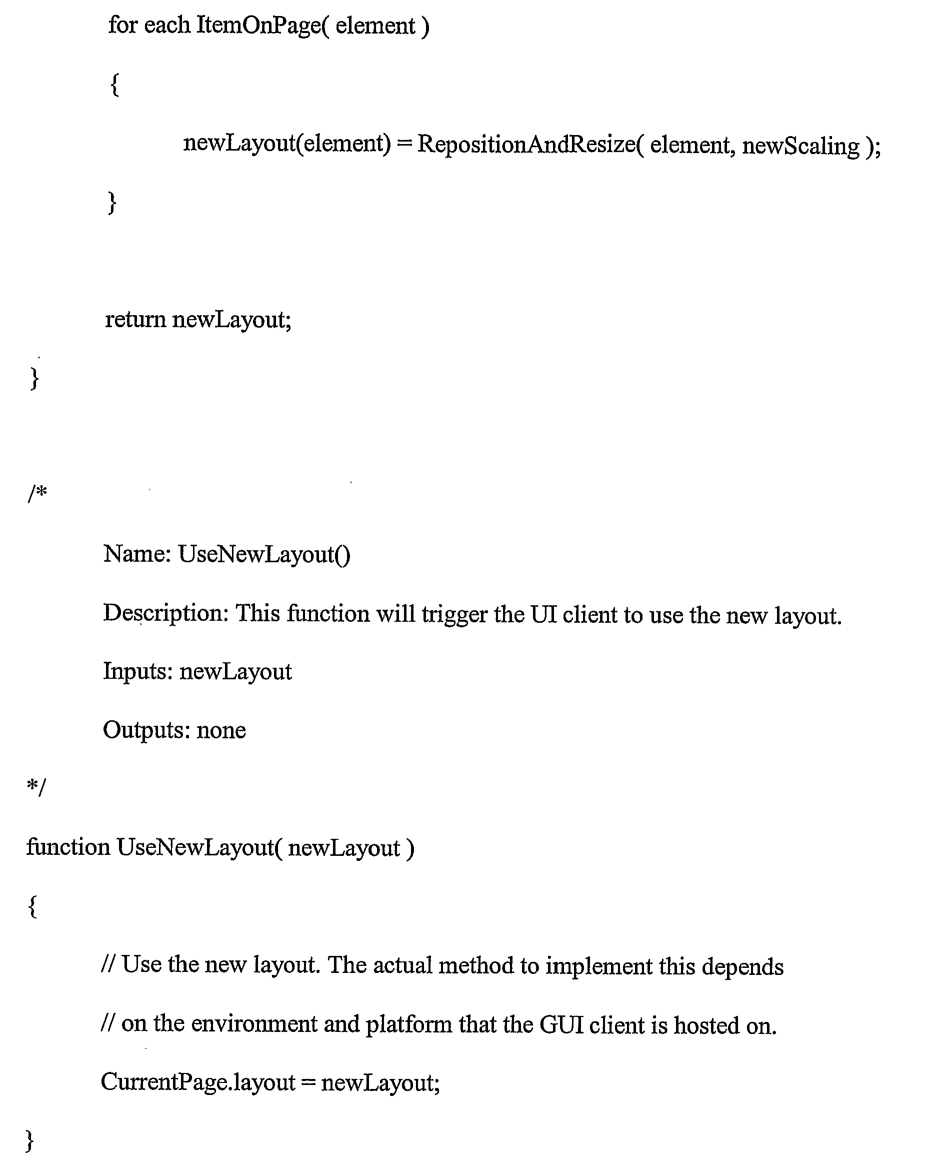

In addition to the above, the present invention recognizes that when a button or other GUI object is reduced, text within the object may be too long to present in the smaller area. Thus, the maximum amount of text for a given font size that can fit within the new, smaller GUI object area is calculated, and then the intended text is cropper to this amount. One non-limiting way to crop the text includes replacing as many end characters of the text as needed to fit within the new area with a post-fix such as three periods, e.g., "the sky is blue and rainy" becomes "the sky is b..." Or, alpha-blending can be used to fade out text, e.g., "the sky is blue and rainy" becomes "the sky is blue", and the last few letters of "blue" can fade away to entirely transparent.

While the particular SYSTEM AND METHOD FOR DYNAMIC RESIZING OF WEB-BASED GUIs is herein shown and described in detail and is fully capable of attaining the above-described objects of the invention, it is to be understood that the scope of the present invention is to be limited by nothing other than the appended claims.

## Claims

1. A method for presenting a GUI (16), comprising:
establishing at least one Web-based template defining a default GUI corresponding to a default screen resolution, the default GUI (16) including plural elements (32, 34), each element (32, 34) having corresponding parameters in the template wherein the parameters include element width, element length, element distances from at least two orthogonal GUI window boundaries, and size of font displayed in an element;
obtaining a resolution of a screen on which the GUI (16) is to be displayed; scanning the web-based template to find elements of the GUI (16) which require re-sizing and/or re-configuring; presenting the GUI (16) on a display with the parameters altered as appropriate for the obtained resolution different from the default resolution,
determining whether a resize timer variable which determines how often a dynamic resizing of the GUI (16) presented on the display occurs has been previously scheduled,
cancelling the resize timer variable if it has been previously scheduled, and
scheduling a new resize timer variable to begin, at a future time, a dynamic resizing of the GUI (16) presented on the display.

2. The method of Claim 1, comprising establishing plural templates corresponding to respective default screen resolutions.

3. The method of Claim 1, wherein the parameters include element width.

4. The method of Claim 1, wherein the parameters include element length.

5. The method of Claim 1, wherein the parameters include element distances from at least two orthogonal GUI window boundaries.

6. The method of Claim 1, wherein the parameters include size of font displayed in an element..

7. The method of Claim 1, wherein element layout is changed from a default layout when a screen resolution different from the default resolution is detected.

8. A processor (18) executing logic to present a GUI on a display based on an at least one Web-based template defining a default GUI corresponding to a default screen resolution, the default GUI (16) including plural elements (32, 34), each element (32, 34) having corresponding parameters in the template, wherein each GUI element (32, 34) includes parameters including element width, element length, element distances from at least two orthogonal GUI window boundaries, and size of font displayed in an element, the processor being operable:
to obtain a resolution of a screen on which the GUI (16) is to be displayed;
to scan the web-based template to find elements of the GUI (16) which require re-sizing and/or re-configuring;
to present the GUI (16) on the display with the parameters altered as appropriate for the obtained resolution different from the default resolution,
to determine whether a resize timer variable which determines how often a dynamic resizing of the GUI presented on the display occurs has been previously scheduled,
to cancel the resize timer variable if it has been previously scheduled, and
to schedule a new resize timer variable to begin, at a future time, a dynamic resizing of the GUI (16) presented on the display.

9. The processor of Claim 8, wherein the logic includes establishing plural templates corresponding to respective default screen resolutions.

10. The processor of Claim 8, wherein element layout is changed from a default layout when a screen resolution different from the default resolution is detected.

11. A system, comprising: an audio- video device (12); and a processor (18) according to claim 8 wherein the GUI (16) is displayed in at least a portion of the display (14) and comprises at least one column of control buttons (32), at least some control buttons (32) being selectable to alter an order of presentation of select buttons (34); and at least two columns of select buttons (34), a select button (34) being selectable to select a respective multimedia stream for playing thereof on the audio-video device (12).

## Patentansprüche

1. Verfahren zur Darstellung einer GUI (16), umfassend:
Erstellen einer webbasierten Vorlage, die eine Standard-GUI definiert, die einer Standardbildschirmauflösung entspricht, wobei die Standard-GUI (16) mehrere Elemente (32, 34) umfasst, und jedes Element (32, 34) entsprechende Parameter in der Vorlage aufweist, wobei die Parameter Elementbreite, Elementlänge, Elementabstände von mindestens zwei orthogonalen GUI-Fensterbegrenzungen und Größe von Schrift, die in einem Element angezeigt wird, umfassen;
Abrufen einer Auflösung eines Bildschirms, auf dem die GUI (16) angezeigt werden soll;
Abtasten der webbasierten Vorlage, um Elemente der GUI (16) zu finden, welche Größenanpassung und/oder Neukonfiguration benötigen; Darstellen der GUI (16) auf einer Anzeige, wobei die Parameter geändert werden, wie jeweils anwendbar für die abgerufene Auflösung, die von der Standardauflösung verschieden ist,
Bestimmen, ob vorher eine Größenanpassungszeitgebervariable festgelegt wurde, welche bestimmt, wie oft eine dynamische Größenanpassung der auf der Anzeige dargestellten GUI (16) stattfindet,
Aufheben der Größenanpassungszeitgebervariablen, wenn sie vorher festgelegt wurde, und
Festlegen einer neuen Größenanpassungszeitgebervariablen, um zu einem späteren Zeitpunkt mit einer dynamischen Größenanpassung der auf der Anzeige dargestellten GUI (16) zu beginnen.

2. Verfahren nach Anspruch 1, umfassend ein Erstellen mehrerer Vorlagen, die jeweiligen Standardbildschirmauflösungen entsprechen.

3. Verfahren nach Anspruch 1, wobei die Parameter Elementbreite umfassen.

4. Verfahren nach Anspruch 1, wobei die Parameter Elementlänge umfassen.

5. Verfahren nach Anspruch 1, wobei die Parameter Elementabstände von mindestens zwei orthogonalen GUI-Fensterbegrenzungen umfassen.

6. Verfahren nach Anspruch 1, wobei die Parameter Größe von Schrift umfassen, die in einem Element angezeigt wird.

7. Verfahren nach Anspruch 1, wobei ein Elementlayout von einem Standardlayout gewechselt wird, wenn eine von der Standardauflösung verschiedene Bildschirmauflösung erkannt wird.

8. Prozessor (18), der Logik ausführt, um eine GUI basierend auf mindestens einer webbasierten Vorlage, die eine Standard-GUI definiert, die einer Standardbildschirmauflösung entspricht, auf einer Anzeige darzustellen, wobei die Standard-GUI (16) mehrere Elemente (32, 34) umfasst, und jedes Element (32, 34) entsprechende Parameter in der Vorlage aufweist, wobei jedes GUI-Element (32, 34) Parameter umfasst, welche Elementbreite, Elementlänge, Elementabstände von mindestens zwei orthogonalen GUI-Fensterbegrenzungen und Größe von Schrift, die in einem Element angezeigt wird, umfassen, wobei der Prozessor ausgelegt ist zum:
Abrufen einer Auflösung eines Bildschirms, auf dem die GUI (16) angezeigt werden soll;
Abtasten der webbasierten Vorlage, um Elemente der GUI (16) zu finden, welche Größenanpassung und/oder Neukonfiguration benötigen;
Darstellen der GUI (16) auf der Anzeige, wobei die Parameter abgeändert werden, wie jeweils anwendbar für die abgerufene Auflösung, die von der Standardauflösung verschieden ist,
Bestimmen, ob vorher eine Größenanpassungszeitgebervariable festgelegt wurde, welche bestimmt, wie oft eine dynamische Größenanpassung der auf der Anzeige dargestellten GUI stattfindet,
Aufheben der Größenanpassungszeitgebervariablen, wenn sie vorher festgelegt wurde, und
Festlegen einer neuen Größenanpassungszeitgebervariablen, um zu einem späteren Zeitpunkt mit einer dynamischen Größenanpassung der auf der Anzeige dargestellten GUI (16) zu beginnen.

9. Prozessor nach Anspruch 8, wobei die Logik ein Erstellen mehrerer Vorlagen umfasst, die jeweiligen Standardbildschirmauflösungen entsprechen.

10. Prozessor nach Anspruch 8, wobei ein Elementlayout von einem Standardlayout gewechselt wird, wenn eine von der Standardauflösung verschiedene Bildschirmauflösung erkannt wird.

11. System, umfassend: eine Audio-/Video-Vorrichtung (12) und einen Prozessor (18) nach Anspruch 8, wobei die GUI (16) auf wenigstens einem Abschnitt der Anzeige (14) angezeigt wird und mindestens eine Spalte von Bedienungsschaltflächen (32), wobei wenigstens einige Bedienungsschaltflächen (32) zum Ändern einer Darstellungsreihenfolge von Auswahlschaltflächen (34) ausgewählt werden können, und mindestens zwei Spalten von Auswahlschaltflächen (34) umfasst, wobei eine Auswahlschaltfläche (34) zum Auswählen eines jeweiligen Multimedia-Stroms zur Wiedergabe davon auf der Audio/Video-Vorrichtung (12) ausgewählt werden kann.

## Revendications

1. Procédé de présentation d'une interface graphique (16), comprenant les étapes suivantes :
établir au moins un modèle basé sur le Web définissant une interface graphique par défaut correspondant à une résolution d'affichage par défaut, l'interface graphique par défaut (16) comprenant plusieurs éléments (32, 34), chaque élément (32, 34) ayant des paramètres correspondants dans le modèle, où les paramètres comprennent la largeur des éléments, la longueur des éléments, les distances des éléments par rapport à au moins deux limites orthogonales de fenêtre d'interface graphique et la taille de la police affichée dans un élément ;
obtenir une résolution d'un affichage sur lequel l'interface graphique (16) doit être affichée ; balayer le modèle basé sur le Web pour trouver les éléments de l'interface graphique (16) qui doivent être redimensionnés et/ou reconfigurés ; présenter l'interface graphique (16) sur un affichage avec les paramètres modifiés de manière appropriée pour la résolution obtenue différente de la résolution par défaut,
déterminer si une variable de minuterie de redimensionnement, qui détermine à quelle fréquence se produit un redimensionnement dynamique de l'interface graphique (16) présentée à l'affichage, a été précédemment programmée,
annuler la variable de minuterie de redimensionnement si elle a déjà été programmée, et
programmer une nouvelle variable de minuterie de redimensionnement pour commencer, à un moment ultérieur, un redimensionnement dynamique de l'interface graphique (16) présentée sur l'affichage.

2. Procédé selon la revendication 1, comprenant l'établissement de plusieurs modèles correspondant aux résolutions d'affichage par défaut respectives.

3. Procédé selon la revendication 1, dans lequel les paramètres comprennent la largeur des éléments.

4. Procédé selon la revendication 1, dans lequel les paramètres comprennent la longueur des éléments.

5. Procédé selon la revendication 1, dans lequel les paramètres comprennent des distances des éléments par rapport à au moins deux limites orthogonales de fenêtre d'interface graphique.

6. Procédé selon la revendication 1, dans lequel les paramètres comprennent la taille de la police affichée dans un élément.

7. Procédé selon la revendication 1, dans lequel la disposition des éléments est modifiée par rapport à une disposition par défaut lorsqu'une résolution d'affichage différente de la résolution par défaut est détectée.

8. Processeur (18) exécutant une logique pour présenter une interface graphique sur un affichage sur la base d'au moins un modèle basé sur le Web définissant une interface graphique par défaut correspondant à une résolution d'affichage par défaut, l'interface graphique par défaut (16) comprenant plusieurs éléments (32, 34), chaque élément (32, 34) ayant des paramètres correspondants dans le modèle, où chaque élément d'interface graphique (32, 34) comprend des paramètres incluant la largeur des éléments, la longueur des éléments, les distances des éléments par rapport à au moins deux limites orthogonales de fenêtre d'interface graphique et la taille de la police affichée dans un élément, le processeur pouvant être utilisé :
pour obtenir la résolution d'un affichage sur lequel l'interface graphique (16) doit être affichée ;
pour balayer le modèle basé sur le Web afin de trouver les éléments de l'interface graphique (16) qui doivent être redimensionnés et/ou reconfigurés ;
pour présenter l'interface graphique (16) sur l'affichage avec les paramètres modifiés de manière appropriée pour la résolution obtenue différente de la résolution par défaut,
pour déterminer si une variable de minuterie de redimensionnement, qui détermine à quelle fréquence se produit un redimensionnement dynamique de l'interface graphique présentée à l'affichage, a été précédemment programmée,
pour annuler la variable de minuterie de redimensionnement si elle a déjà été programmée, et
pour programmer une nouvelle variable de minuterie de redimensionnement pour commencer, à un moment ultérieur, un redimensionnement dynamique de l'interface graphique (16) présentée sur l'affichage.

9. Processeur selon la revendication 8, dans lequel la logique comprend d'établir plusieurs modèles correspondant aux résolutions d'affichage par défaut respectives.

10. Processeur selon la revendication 8, dans lequel la disposition des éléments est modifiée par rapport à une disposition par défaut lorsqu'une résolution d'affichage différente de la résolution par défaut est détectée.

11. Système, comprenant : un dispositif audio-vidéo (12) ; et un processeur (18) selon la revendication 8, où l'interface graphique (16) est affichée dans au moins une partie de l'affichage (14) et comprend au moins une colonne de boutons de commande (32), au moins certains boutons de commande (32) pouvant être sélectionnés pour modifier un ordre de présentation des boutons de sélection (34) ; et au moins deux colonnes de boutons de sélection (34), un bouton de sélection (34) pouvant être sélectionné pour sélectionner un flux multimédia respectif à lire sur le dispositif audio-vidéo (12).
